Europäisches Patentamt

European Patent Office

Office européen des brevets

(11) Publication number: **0 150 599**
**B1**

(12) **EUROPEAN PATENT SPECIFICATION**

(45) Date of publication of patent specification: **26.04.89**

(21) Application number: **84308737.0**

(22) Date of filing: **14.12.84**

(51) Int. Cl.⁴: **F 25 B 9/00, F 25 B 11/00,
B 64 D 13/08, F 04 D 25/16,
F 04 D 29/04**

(54) Air cycle cooling machine.

(30) Priority: **16.12.83 US 562488
16.12.83 US 562490**

(43) Date of publication of application:
**07.08.85 Bulletin 85/32**

(45) Publication of the grant of the patent:
**26.04.89 Bulletin 89/17**

(84) Designated Contracting States:
**DE FR GB IT SE**

(56) References cited:
**EP-A-0 019 492
FR-A-1 196 586
GB-A- 790 355
US-A-2 304 151
US-A-2 477 931
US-A-2 518 246
US-A-3 080 728
US-A-3 201 941
US-A-3 728 857
US-A-4 167 295
US-A-4 355 850
US-A-4 402 618**

(73) Proprietor: **ALLIED-SIGNAL INC.
Columbia Road and Park Avenue P.O. Box 2245R
Morristown New Jersey 07960 (US)**

(72) Inventor: **Wieland, K.H.
91 Dapplegray Lane
Rolling Hills Estates California (US)**
Inventor: **Spencer, D.M.
5040 Via Ricardo
Yorba Linda, California 92686 (US)**
Inventor: **Kinsell, R.C.
2100 Westridge Road
Los Angeles California (US)**

(74) Representative: **Rees, David Christopher
Kilburn & Strode 30 John Street
London WC1N 2DD (GB)**

Courier Press, Leamington Spa, England.

## Description

The present invention relates to an air cycle cooling machine used to supply pressurised cooling air to aircraft cabins. Such a machine comprises three primary elements—a fan impeller, a turbine wheel and a compressor impeller—each fixedly mounted on a common drive shaft. U.S. Patent No. 2477931, assigned to the present applicants, disclosed an aircraft cabin air cooling system, in which air taken from a supercharger of a main engine of the aircraft was passed directly into the cabin via two heat exchangers, one of which was a double unit giving indirect heat exchange between the cabin air and air from the same source, but bled off and passed through an open circuit through the heat exchanger by an air turbine and compressor coupled together on a common shaft. In a variant described in the same patent, U.S. 2477931, an instrument enclosure was cooled by air drawn by a fan through a closed circuit including a heat exchanger, in which the cooling air yielded heat to air passed from the main engine supercharger to atmosphere by a turbine driving an air pump on a common shaft therewith, the fan being carried by the shaft between the turbine and the air pump. Another prior art arrangement, which is similar in its essentials to that described in EP-A-0019492 of the present applicants, is shown in Figure 1 of the accompanying drawings.

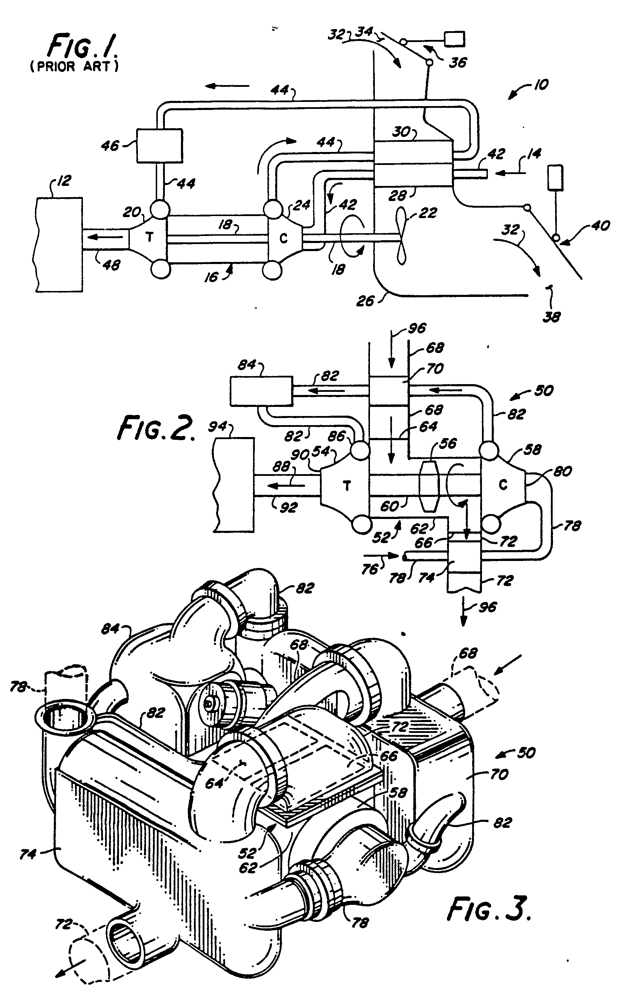

Schematically illustrated in Figure 1 is a conventional air cycle cooling machine system 10 which is used to supply environment control cooling air to an aircraft cabin 12, utilising bleed air 14 from the aircraft's propulsion engine compressor. The system 10 includes an air cycle cooling machine 16 which includes a drive shaft 18, a turbine 20 secured to the left end of the shaft, a fan 22 mounted on the right end of the shaft, and a compressor 24 operably mounted on a central portion of the shaft, between the turbine 20 and the fan 22.

The fan 22 is mounted "outboard" (i.e. cantilevered on shaft 18) relative to the turbine 20 and compressor 24, and is positioned within a ram air duct 26, downstream from a pair of series-mounted heat exchangers 28, 30 positioned within the duct 26. Operation of the fan 22 draws ambient air 32 into an inlet opening 34 of the duct 26, which is controlled by conventional valve and damper means 36, across the heat exchangers 28, 30, and forces the air 32 out through a discharge opening 38 positioned at the opposite end of the duct 26, and controlled by conventional valve and damper means 40.

During operation of the cooling machine 16, the compressor 24 further compresses bleed air 14 entering via a supply duct 42 and derived from the aircraft's propulsion engine compressor. This air is partially cooled by the first heat exchanger 28, and is then discharged from the compressor 24 at a higher pressure and is forced, via a discharge duct 44, sequentially through the second heat exchanger 30 (where the air is further cooled), a conventional moisture removal system 46, and through the turbine 20. The bleed air which flows through the turbine 20 is expanded and further cooled, and leaves the turbine as environmental control cooling air which is supplied to the cabin 12 via a discharge duct 48. Such air rotationally drives the turbine 20 and, via the common driveshaft 18, the fan 22 and the compressor.

Several well-known problems and disadvantages are associated with the conventional air cycle cooling machine 16 of Figure 1. For example, because the temperature of the ram air leaving the heat exchanger 28 is commonly in excess of 232°C (450°F), it is necessary to isolate the bearings (typically of a conventional oil-lubricated type) which rotationally support the shaft 18 between the turbine and compressor from such high temperature. This requirement dictates that the bearings be positioned outside the ram air duct 26 and that the fan 22 be "outboard" mounted as illustrated, so that the balance of the cooling machine 16 can be positioned entirely outside the ram-air duct 26. As can be seen, this results in a rather awkward, space-consuming cooling system package which has a total width (the left-to-right dimension in Figure 1) equal to the width of the duct 26 plus nearly the entire length of cooling machine 16.

Additionally, because of the required cantilevered positioning of the fan 22 relative to the turbine 20 and compressor 24, several other design and operating problems arise. First, it is necessary to extend the shaft 18 through both the supply duct 42 (adjacent the compressor inlet) and a sidewall of the ram air duct 26, requiring that each shaft-duct juncture be carefully sealed to avoid leakage. Moreover, the shaft 18 must extend through the compressor 24, thereby unavoidably blocking a portion of its inlet opening.

The conventional cantilevered positioning of the fan 22 also imposes artificial design limitations on the turbine 20 and compressor 24. Specifically, to limit bending stress on the portion of the shaft 18 extending between the compressor and the fan, the rotational speed of the fan 22 must be kept below a critical limit thereby limiting the rotational speed of both the turbine and compressor. This requires that the turbine and compressor be configured such that, at their flow rates, neither of their rotational speeds exceeds the critical fan speed. The result is that the efficiency of these elements (and thus the overall efficiency of the cooling machine) is markedly less than might otherwise be possible.

Finally, since the fan 22 is exposed to the high temperature ram air (usually at least 204°C (400°F)) leaving the heat exchanger 28 within the duct 26, it is normally required that it be constructed of a highly heat resistant material such as titanium. This, of course, increases the cost of the air cycle machine 16. Additionally, since titanium is a relatively heavy material, the rotational speed limit of the fan 22 (and thus the compressor and turbine as well) is further reduced.

Although generally reliable and fairly simple, the conventional air cycle cooling machine system just described thus has associated therewith several well-known disadvantages and heretofore unsolved problems. One such problem is that because the fan impeller is "outboard" mounted (i.e., cantilevered at one end of the drive shaft a considerable distance from the compressor and turbine and their housings near the other end of the shaft) its maximum permissible rotational speed dictates the design parameters of the turbine and compressor, thereby artificially limiting their efficiences.

More specifically, since there is a critical rotational speed above which the cantilevered fan cannot be operated, such critical speed also sets the maximum rotational speed of both the compressor and fan. Thus, for given bleed air flow rates through the compressor and turbine, the sizes and configurations of these elements must be designed so that their rotational speeds do not exceed the maximum permissible fan speed. This typically means that both the compressor and turbine must be operated with considerably less efficiency than would otherwise be possible.

Another problem, as has been mentioned, is that the fan must usually be of a special material, such as titanium, to withstand the high temperature (typically in excess of 232°C (450°F)) downstream from the dual heat exchangers, and to lessen the rotationally-induced bending stress on the shaft (thereby permitting a higher maximum fan speed). The necessity of using a titanium fan impeller, of course, markedly increases the cost of the air cycle machine.

Finally, as has been said, in conventional air cycle machines it is necessary to isolate their oil-fed bearings from the high temperature air exiting the ram air duct heat exchangers. As previously described, this requires that all of the air cycle machine except the fan and its cantilevered shaft portion be positioned outside of the ram air duct — an orientation which typically results in the air cycle machine projecting laterally a considerable distance from one side of the duct, thereby adding appreciably to the overall equipment space requirements.

US-A-2518246 shows a system for cooling an aircraft cabin having a compressor for providing compressed air to the cabin by way of a second compressor rotor, a cooler and a turbine rotor T. The heat exchanger uses ambient cooling air driven by a fan on the shaft driving the compressor rotor from the turbine and positioned between the two rotors.

US-A-4355850 shows a conventional turbocharger for an I.C. engine in which the turbocharger rotor shaft is mounted by gas bearings consisting of two journal bearings and one thrust bearing. The gas bearings use ambient air sucked into them, and, although there is no specific written disclosure of the source of that ambient air, it appears to be derived from the output of the compressor rotor upstream of the diffuser.

Accordingly, it is an object of the present invention to provide an air cycle cooling machine which reduces or eliminates some or all the above-mentioned problems and disadvantages associated with conventional air cycle cooling apparatus.

According to the present invention, an air cycle cooling machine including a shaft having secured thereto a wheel of a turbine, a fan, and an impeller of a compressor with the fan positioned on the shaft between the turbine wheel and the impeller, and delivery means for delivering to the turbine wheel air pressurised by the compressor so that the turbine is driven by the pressurised air, thereby to rotate the shaft and with it the impeller and fan, is characterised in that the shaft is supported by one or more gas foil bearings, which are continuously lubricated by pressurised air drawn from the turbine wheel housing through the or each gas foil bearing, and into the fan housing.

By virtue of this arrangement it is possible to achieve excellent bearing support for the shaft, utilising readily available air at a controlled pressure and temperature. This avoids the need for an oil-based lubrication system, and in turn permits a higher rotational shaft speed. The gas foil bearings are preferably a kind similar to those described and illustrated in U.S. Patent No. 3615121 assigned to the present applicants. In a later U.S. patent, US4355850, there is a disclosure of an automotive turbocharger, having air foil journal bearings and thrust bearings. The journal bearings are similar to those in the above-mentioned U.S. Patent No. 3615121, in which a shaft is rotated in a fixed annular housing with an annular gap around the shaft, in which a set of overlapping metal foils is mounted in the bore of the housing, pressurised air being introduced into the gap to provide low friction support for the shaft journal. The thrust bearing described in U.S. Patent No. 4355850 has a wheel or runner fixed to the shaft and rotating in a radial space into which pressurised air was introduced. Four flat, nonoverlapping foils were supported on each radial face of the runner by a light corrugated spring.

Preferably, there are two parallel air flow paths from the turbine wheel housing through respective gas foil bearings and thence to the fan housing.

Specifically, the bearings may include a pair of journal bearings, one on each side of the fan and each including a stationary part or parts supported by the fan housing.

A bleed passage may be provided to transfer air from the turbine housing to a first of the journal bearings and a further passage arranged to communicate air from adjacent the first journal bearing to the second journal bearing.

A gas foil thrust bearing may be included to provide axial support for the shaft, the gas foil thrust being lubricated by air derived from the turbine. The shaft may carry a thrust plate extending radial therefrom into an annular space to which air is communicated from the turbine housing, the annular space being partially defined by a pair of stationary radially walls separated from the thrust plate to define radial spaces within which stationary foil means is disposed, and the annular spaced may communicate directly with one of the journal bearings whereby air passes sequentially through the thrust bearing and the one journal bearing.

According to a preferred aspect of the present invention apparatus for providing cooled air to conditioned space, such as an aircraft cabin, in which the shaft has a first outer shaft section extending intermediately between the fan and the turbine wheel, to the second outer shaft section extending intermediately between the fan and the impeller, end portions of the outer shaft sections being separated in each case by an annular space from a surrounding stationary structure portion to form, with foils located in the annular spaces, gas foil journal bearings form the shaft, and means being provided to transmit air from the delivery means to each of the gas foil journal bearings.

The invention may be carried into practice in various ways, but one specific embodiment will now be described, by way of example, with reference to the accompanying drawings in which:-

Figure 1 (Prior Art) is a schematic diagram of a conventional air cycle cooling machine system;

Figure 2 is a schematic diagram of an air cycle cooling machine system which embodies principles of the present invention;

Figure 3 is a perspective view of the system of Figure 2;

Figure 4 is a greatly enlarged cross-sectional view through the cooling machine system schematically illustrated in Figure 2;

Figure 5 is a reduced scale, exploded perspective view of the cooling machine system of Figure 3;

Figure 6 is a diagrammatic cross section on the line 6-6 of Figure 4 showing a gas foil journal bearing; and

Figure 7 is a perspective view showing a gas foil thrust bearing.

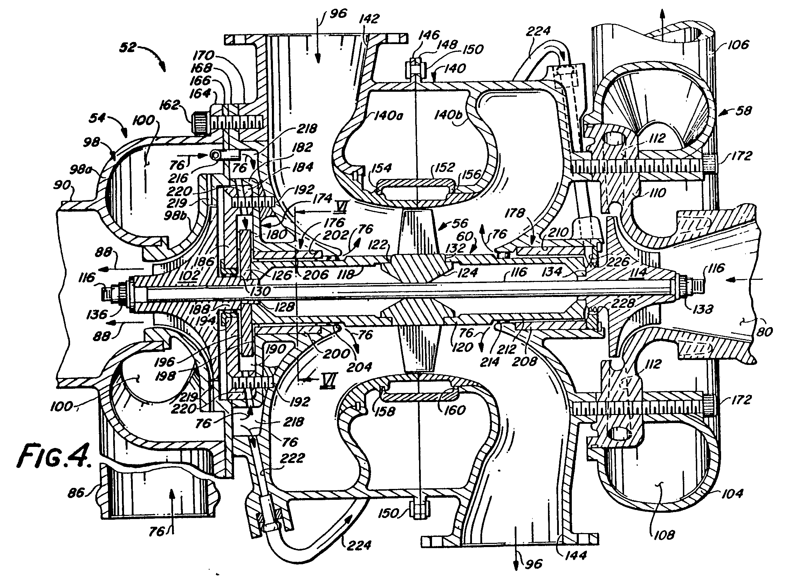

The present invention provides a greatly improved, compact air cycle cooling machine system 50 (Figs. 2 and 4) which eliminates or minimizes the above-mentioned and other problems. System 50 incorporates a uniquely constructed cooling machine 52 which, like its conventional counterpart 16, comprises a turbine 54, a fan 56, and a compressor 58 each secured to a common shaft system 60 for conjoint rotation therewith. As will be described in relation to Figure 4, the turbine, compressor, and fan are provided with their own housings 98, 104, and 140. It is so arranged that these housings can be clamped together with their inlet/outlet passages in varying circumferential positions (which, in fact, do differ as between the various Figures of the drawings). Further explanation of this feature will be made later.

Importantly, however, as shown in Figure 2, the fan 56 is positioned between the turbine 54 and the compressor 58 which are respectively secured to the opposite ends of the shaft system 60. Circumscribing the fan 56 and extending between the turbine 54 and the compressor 58 is a fan housing 62 having an inlet 64 and an outlet 66, each positioned between the fan and turbine. Secured to the inlet 64 is a first, inlet, portion 68 of a ram air duct having positioned therein a first heat exchanger 70. A second, outlet, portion 72 of the ram air duct is secured to the housing outlet 66 and has positioned therein a second heat exchanger 74.

During operation of the system 50, hot bleed air 76 from the aircraft's engine compressor is forced, via a supply duct 78, through the second heat exchanger 74 and into the inlet 80 of the compressor 58. The compressed bleed air discharged from the compressor 58 then flows, via discharge ductwork 82, sequentially through the first heat exchanger 70, a conventional moisture removal system 84, and into the inlet 86 of the turbine 54. Expanded, cooled air 88 leaving the turbine outlet 90 is supplied, via a discharge duct 92, as environmental control air to an aircraft cabin 94 or other air conditioned space. Additionally, passage of the bleed air through the turbine, rotationally drives the three components of the air cycle machine 52 i.e. the turbine 54, fan 56 and compressor 58. Rotation of the fan 56 draws ambient air 96 into the inlet ram air duct portion 68, sequentially across the first heat exchanger 70, through the fan housing 62 and across the second heat exchanger 74, and then forces the ambient air outwardly through the outlet ram air duct portion 72, thereby pre-cooling the bleed air flowing through the ducts 78 and 82.

The central positioning of the fan 56 facilitates an extremely compact packaging arrangement of the system 50 illustrated in perspective in Figure 3. In such an arrangement, both the air cycle machine 52, and the moisture removal system 84 are physically positioned between the heat exchangers 70, 74, with the machine 52 extending longitudinally parallel to the lengths of the heat exchangers, and the moisture removal system 84 being positioned adjacent the turbine end of the cooling machine. Positioned in this fashion, the air cycle machine does not project outwardly of the heat exchangers, thereby greatly reducing the overall size of system 50 relative to the size of the conventional system 10 of Figure 1.

It should also be noted that, in the system arrangement depicted in Figures 2 and 3, the fan 56 is positioned in the air flow between the two exchangers 70, 74 instead of being positioned downstream of both heat exchangers, as in the conventional system of Figure 1. Unlike the conventional fan position in Figure 1, this novel arrangement protects the fan 56 from debris in the ram air duct (either upstream or downstream from the fan) by using the heat exchangers 70, 74 as upstream and downstream debris barriers, respectively.

Not only is the fan 56 essentially completely protected and isolated from potentially harmful debris, but it need withstand only approximately half the temperature that its conventional counterpart must withstand. This is due to the fact that the fan 56 is downstream of only the heat exchanger 70. Accordingly, of the total heat added to the ambient air 96 by such heat exchangers, approximately half is added after the air has left the fan housing 62. Because of this feature, the fan 56 is able to be constructed of aluminium rather than the heavier and costlier titanium required for the fan 22 of Figure 1.

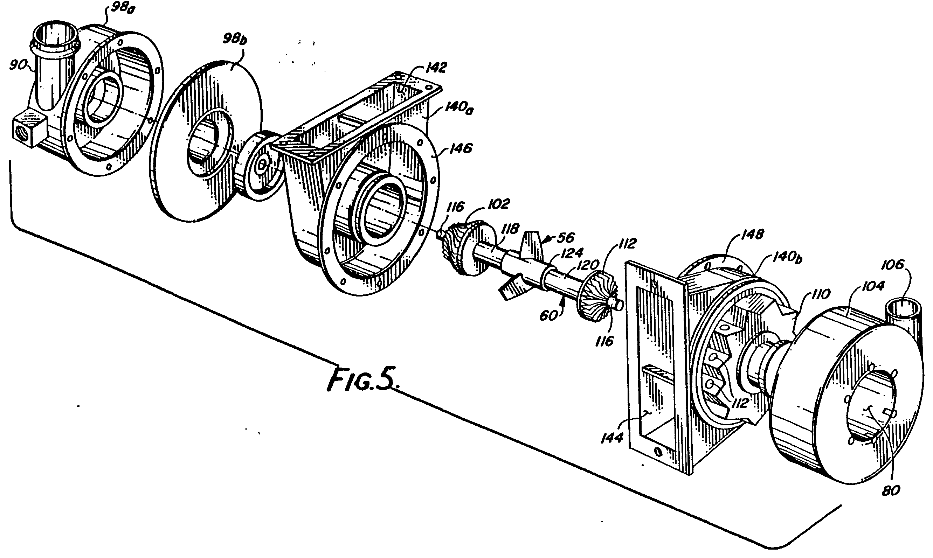

Referring to Figures 4 and 5, the construction and operation of the improved air cycle cooling machine 52 will now be described in greater detail. The turbine 54 includes a hollow, generally cylindrical housing 98 into which the turbine inlet 86 (Figure 4) enters generally tangentially, and from which the turbine outlet 90 (Figure 5) centrally extends in an axial direction. The turbine housing 98 comprises axially outer and inner portions 98a, 98b and has defined therein a generally annular inlet passage 100, which circumscribes a bladed turbine wheel 102, and communicates with the turbine inlet 86. Thus, the wheel 102 receives air 76 from the main engine compressor, further pressurised by compressor 58, via a delivery means comprising ductwork 82, moisture removal means 84 (Figure 2) and turbine inlet 86.

The compressor 58 comprises a hollow, generally cylindrical housing 104 into which the inlet 80 axially enters, and from which an outlet 106 generally tangentially extends. The compressor housing 104 has defined therein an annular discharge passage 108 which circumscribes an annular diffuser section 110 having formed therein an annular array of generally radially extending diffuser passages 112. These passages 112 extend between the inlet and discharge passages 80, 108 and circumscribe the discharge end of a bladed compressor impeller 114.

The shaft system 60, which extends between the mutually spaced turbine wheel 102 and compressor impeller 114, includes a main or inner shaft 116 which extends, along a central portion thereof, through the fan impeller 56. At its left end, the shaft 116 is extended through the turbine wheel 102, and at its right end is extended through the compressor impeller 114. The shaft system also include a first hollow outer shaft portion 118, to the left of the fan 56, and a second hollow outer shaft portion 120, to the right of the fan 56. The shaft portion 118 coaxially circumscribes the inner shaft 116 and extends from an annular shoulder 122 formed on a central hub 124 of the fan 56 leftwardly to a radially inner portion of an annular thrust bearing runner plate 126 (having a function to be subsequently described). The runner plate 126, as well as a left end portion of the outer shaft portion 118, has extended therethrough an axially inner end portion 128 of the turbine wheel 102. The runner plate 126 bears against an annular shoulder 130 formed on the impeller 102. At the right hand side of the fan 56, the second outer shaft portion 120 similarly extends between an annular shoulder 132 on the fan hub 124 and an annular shoulder 134 on the compressor impeller 114.

The turbine wheel 102, the bearing runner plate 126, the outer shaft portions 118, 120, the fan hub 124 and the compressor impeller 114 are frictionally locked together for conjoint rotation by means of a pair of tightening nuts 136, 138 which engage the outer threaded ends of the inner shaft 116 and respectively bear against the outer ends of the turbine wheel 102 and the compressor impeller 114. As these nuts are tightened, the turbine wheel 102 and the compressor impeller 114 are forced inwardly along shaft 116, in turn forcing the outer shaft portions 118, 120 into frictional engagement with the fan hub 124. In this manner, the shaft system 60 is frictionally locked to the turbine, fan, and compressor elements of the air cycle machine 52.

Extending completely between the turbine housing 98 and the compressor housing 104, and circumscribing the fan 56, is a hollow fan housing 140 which is axially divided into two separate, generally cylindrical sections 140a, 140b. The left-hand section 140a has an inlet 142 on one side of the fan 56, and the right-hand section 140b has an outlet 144 on the other side of the fan. The two housing sections are joined at their juncture by means of a pair of abutting annular flanges 146, 148 thereon through which extend an annular array of bolts 150 or other suitable fasteners. Circumscribing a radially inner portion of the abutting housing sections 104a, 140b and the fan 156, is a burst containment ring 152 having a generally U-shaped cross-section with inturned lips 154, 156. To restrain the ring 152 against axial movement, the lip 154 is received in an annular channel 158 formed in the left-hand housing section 140a, and the other lip 156 bears against an annular shoulder 160 formed in the right-hand section 140b.

The left-hand fan housing section 140a is secured to the turbine housing 98 by an annular array of bolts 162 (only one of which is shown in Fig. 4) which extends successively through annular flanges 164, 166 on the turbine housing 98, and annular flanges 168, 170 on the fan housing section 140a. At the opposite end of the air cycle machine 52, the compressor housing 104 is similarly secured to the fan housing section 140b by an annular array of bolts 172 which extend successively through the compressor housing 104, the diffuser 110 and into the fan housing 140b.

The assembly of the turbine housing, fan housing and compressor housing described above ensures that the three units, and also the two halves of the fan housing, abut in radial planes, and by means of abutting annular flanges in each case. Thus the abutment between the turbine housing 98 and the left-hand fan housing section 140a occurs at the joining plane between the flanges 166 and 168.

Similarly the abutment of the two fan housing sections 140a and 140b occurs at the joining plane of their respective flanges 146 and 148. Furthermore, the right-hand fan housing section 140b and the compressor housing 104 also abut in a radial plane 105.

This arrangement and joining method very advantageously permits the turbine inlet 86, the fan inlet 142, the fan outlet 144 and the compressor outlet 106 to be "clocked" (i.e., rotationally oriented) relative to each other in a wide variety of ways thereby affording great installation flexibility to the cooling machine 52, More specifically, as can be seen by comparing Figures 3, 4 and 5, since the turbine and compressor housings 98 and 104 respectively can be variably rotationally oriented relative to their adjacent fan housing sections 140a, 140b, and sections 140a, 140b can be similarly adjusted with respect to one another, the aforementioned inlets and outlets can be independently positioned to provide convenient connection points for an equally wide variety of bleed air duct and ram air duct orientations. Figures 3, 4 and 5 each depict a different one of many possible combinations of inlet-outlet relative positioning made possible by this facet of the present invention.

At this point another distinct advantage of the unique construction of the air cycle machine 52 should be noted. Unlike the conventional construction of the cooling machine 16 of Figure 1, the shaft system 60 of the machine 52 does not extend entirely through the compressor inlet 80 (or, for that matter, the turbine outlet 90). Thus, the shaft system in no way impedes the flow of air into the compressor 114 or out of the turbine. Neither does the shaft system have to be extended through any compressor inlet ductwork as in the conventional configuration of Figure 1.

Additionally, it should be noted that the maximum diameter of the shaft system 60 (i.e. the outer diameter of the two shaft sections 118, 120) is essentially as large as the discharge diameter of the turbine wheel 102, or the inlet diameter of the compressor impeller 114. It is, of course, these large diameter shaft sections which support the fan 56 both at a central and radial outer position of its hub 124. This larger diameter shaft support ·of the fan could not be accomplished in the conventional Figure 1 configuration because the portion of its shaft 18 extending between the compressor 24 and the fan 22 must, of necessity, be smaller in diameter than the compressor impeller inlet diameter. As so far described, the arrangement is as described in EP-A-0147987 of the same applicants and claiming the same priority.

Facilitating the advantageous central positioning of the fan 56 is the use in the present invention of a unique gas foil bearing system which supports the shaft system 60 and is continuously lubricated by a portion of the bleed air 76 used rotationally to drive the turbine 102, the fan 56 and the compressor 114. Referring now to Figures 4, 6 and 7, the bearing system comprises a gas foil thrust bearing 174 positioned between the turbine wheel 102 and the left end of the outer shaft section 118, a gas foil journal bearing 176 positioned at the left end of the outer shaft section 118, and a gas foil journal bearing 178 positioned at the right hand end of the outer shaft section 120. The gas foil bearings 174, 176 and 178 are each generally similar in construction to those illustrated and described in U.S. Patent 3,615,121 assigned to the present Applicant. However, in the present invention, such bearings are positioned and continuously lubricated in a novel manner which will now be described.

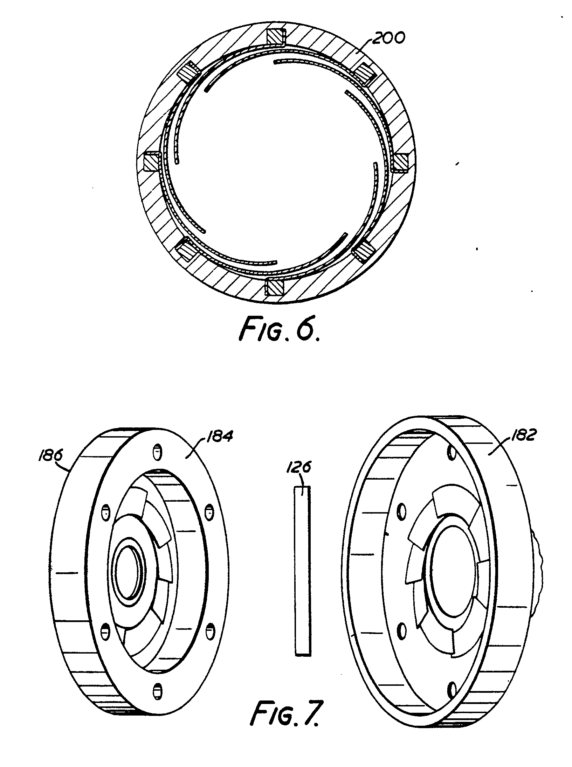

An example of a suitable form of the thrust foil bearing 174 is shown in Figure 7. It comprises a stationary annular, inner, thrust plate 180 which is defined by a radially inner left end portion of the fan housing section 140a and circumscribes the left end of the outer shaft section 118. The thrust plate 180 has a leftwardly extending annular peripheral lip 182 which overlies a rightwardly extending annular lip 184 on a second, stationary, annular outer thrust plate 186 that circumscribes a narrow neck portion 188 of the turbine wheel immediately to the left of the shoulder 130. The outer thrust plate 186 is positioned to the left of the inner thrust plate 180, defining therewith an annular passage 190, and is secured around its periphery to the fan housing section 140a by an annular array of bolts 192. Operatively positioned between the turbine wheel neck portion 188 and the outer thrust 186 is an annular knife-edged labyrinth seal 194. The annular thrust bearing runner plate 126 extends in a radial direction partially into the annular passage 190. The plate 126 is slightly thinner than the thickness of the passage 190, thereby defining, with the stationary plates 180 and 186, an annular, outer, clearance space 196 between plates 186 and 126, and an annular, inner, clearance space 198 between the plates 126 and 180. As shown in Figure 7, operatively positioned in each of the clearance spaces 196, 198 is an annular array of overlapping foil elements 199 which function, during operation of the gas foil thrust bearing 174, in the manner as described in the U.S. Patent 3,615,121, previously referred to.

The gas foil journal bearing 176 comprises a stationary cylindrical bushing 200 which coaxially circumscribes, but is slightly spaced from, a left end portion of the outer shaft section 118 and is press-fitted into a cylindrical bore 202, formed in the left-hand fan housing section 140a. Interposed between the housing section 140a and the shaft section 118, immediately to the right of the bushing 200, is an annular knife-edged labyrinth seal 204. The inner diameter of the bushing 200 is slightly larger than the portion of shaft section 118 which it circumscribes, and defines therewith an annular clearance space 206 which communicates at its left end with a radially inner annular portion of the clearance space 198 of the thrust bearing. Operatively positioned within the clearance space 206 is an annular array of overlapping foil elements which function during rotation of the shaft means 60 as described in U.S. Patent 3,625,121.

The gas foil journal bearing 178, at the right-hand end of the shaft system, is similar in construction and operation to the bearing 176 and comprises a bushing 208 press-fitted into a bore 210 in the fan housing section 140b, circumscribing a right end portion of the outer shaft section 120 and defining therewith an annular clearance space 212 in which is operatively positioned an annular array of foil elements (not shown), but of the same type shown in Figure 6. Interposed between fan housing section 140b and shaft section 120 immediately to the left of bushing 208 is an annular knife-edge labyrinth seal 214.

The gas foil bearing system (i.e., bearings 174, 176 and 178) is lubricated, and provided with the necessary hydrodynamic supporting force, by the use of bleed air 76 in the following manner. A small portion of the pressurized bleed air 76 entering the turbine housing inlet passage 100 is forced, via a small transfer tube 216, into an annular passage 218 which is defined between the turbine housing and fan housing sections 98b, 104a respectively and circumscribes the flange lip 182. The balance of the bleed air entering the inlet passage 100 is forced radially inwardly through turbine nozzle openings 219 and through the bladed portion of the turbine wheel 102, becoming the cooling air 88 upon its exit from the turbine wheel. From the annular passage 218, bleed air is forced, via an annular series of bores 220 formed through the abutting flange lips 182, 184, into a radially outer portion of the annular passage 190. Bleed air entering the passage 190 is forced through the thrust bearing clearance spaces 196, 198 and then through the journal bearing clearance space 206, across the labryrinth seal 204, and into the interior of the fan housing section 140a.

Another portion of the bleed air entering the passage 218 is forced, via a bore 222 in the fan housing section 140a, into one end of a transfer conduit 224 which communicates at its opposite end with a small transfer passage 226. This transfer passage 226 communicates with the journal bearing clearance space 212. Bleed air entering the transfer passage 226 is sequentially forced into the annular passage 228, through the clearance space 212, across the labyrinth seal 214 and into the interior of the fan housing section 140b. All of the lubricating bleed air entering the fan housing is forced outwardly through its outlet 144 by the rotation of the fan 56.

It can be seen that the present invention's utilization of engine compressor bleed air to drive both the air cycle machine and continuously lubricate its bearing system eliminates the conventional necessity of using a separate, oil-based lubrication system which must be isolated or otherwise protected from the heated ram air 96 traversing the fan housing. Additionally, the gas foil bearings 174, 176, 178 themselves are unaffected by their proximity to this high temperature air and permit substantially higher rotational speeds than do conventional oil-lubricated bearings.

In summary, in accordance with the foregoing description, a substantially improved air cycle cooling machine system is provided in which the machine's fan is positioned between the turbine and compressor and between the two series-mounted heat exchangers. By providing two parallel bleed air flow paths within the cooling machine—one across the turbine wheel and the other through the bearing system and into the fan housing—a particularly advantageous dual use of such bleed air is achieved. Because of these features, both the cooling machine and the system which incorporates it are rendered more reliable, compact, rugged and efficient.

## Claims

1. An air cycle cooling machine including a shaft (60) having secured thereto a wheel (102) of a turbine (54), a fan (56), and an impeller (114) of a compressor (58) with the fan positioned on the shaft between the turbine wheel and the impeller, and delivery means (82, 84, 86) for delivering to the turbine wheel air pressurised by the compressor so that the turbine is driven by the pressurised air, thereby to rotate the shaft and with it the impeller and fan, characterised in that the shaft is supported by one or more gas foil bearings (174, 176, 178), which are continuously lubricated by pressurised air drawn from the turbine wheel housing (98) through the or each gas foil bearing, and into the fan housing (104).

2. A machine as claimed in Claim 1 including two parallel air flow paths from the turbine wheel housing through respective gas foil bearings and thence to the fan housing.

3. A machine as claimed in Claim 1 or Claim 2, in which the bearings include a pair of journal bearings (176, 178), one each side of the fan and each including a stationary part or parts (200, 208) supported by the fan housing.

4. A machine as claimed in Claim 3 including a bleed passage (218) to transfer air from the turbine housing to a first of the journal bearings (176) and a further passage (226) arranged to communicate air from adjacent the first journal bearing to the second journal bearing (178).

5. A machine as claimed in any preceding claim including a gas foil thrust bearing (174) providing axial support for the shaft, the gas foil thrust bearing being lubricated by air derived from the delivery means.

6. A machine as claimed in Claim 5 in which the shaft carries a thrust plate (186) extending radially therefrom into an annular space (190) to which air is communicated from the turbine housing, the annular space being partially defined by a pair of stationary radial walls (180, 186) separated from the thrust plate to define radial spaces (196, 198) within which stationary foil means (199) is disposed.

7. A machine as claimed in Claim 6 in which the annular space (190) communicates directly with one of the journal bearings (176) whereby air passes sequentially through the trust bearing and the one journal bearing (176).

8. A machine as claimed in any preceding claim for providing cooled air (88) to a conditioned space, such as an aircraft cabin in which the shaft has a first outer shaft section (118) extending intermediately between the fan and the turbine wheel and a second outer shaft section (120) extending intermediately between the fan and the impeller, end portions of the outer shaft sections being separated in each case by an annular space (206, 212) from a surrounding stationary structure portion to form, with foils located in the annular spaces, the gas foil journal bearings (176, 178).

## Patentansprüche

1. Luftkreislauf-Kältemaschine mit einer Welle (60), mit der ein Rad (102) einer Turbine (54), ein Lüfter (56) und ein Laufrad (114) eines Kompressors (58) befestigt sind, wobei der Lüfter auf der Welle zwischen Turbinenrad und Laufrad angeordnet ist, und mit einer Abgabevorrichtung (82, 84, 86) zur Abgabe von Druckluft durch den Kompressor an das Turbinenrad, derart, daß die Turbine durch die Druckluft angetrieben wird und dadurch die Welle und mit ihr das Laufrad und der Lüfter in Drehung versetzt werden, dadurch gekennzeichnet, daß die Welle durch ein oder mehrere Gasfolienlager (174, 176, 178) gelagert ist, die laufend durch Druckluft geschmiert sind, welche aus dem Turbinenradgehäuse (98) über das oder jedes Gasfolienlager und in das Lüftergehäuse (104) geführt wird.

2. Maschine nach Anspruch 1, mit zwei parallelen Luftdurchflußpfaden von dem Turbinenradgehäuse durch entsprechende Gasfolienlager und damit zum Lüftergehäuse.

3. Maschine nach Anspruch 1 oder 2, bei der die Lager ein Paar Achslager (176, 178) aufweisen, wobei jeweils ein Lager auf jeder Seite des Lüfters angeordnet ist und jedes Lager einen stationären Teil oder stationäre Teile (200, 208) aufweist, die von dem Lüftergehäuse aufgenommen werden.

4. Maschine nach Anspruch 3, mit einer Anzapfleitung (218) zur Übertragung von Luft aus dem Turbinengehäuse in ein erstes der Achslager (176), und einer weiteren Leitung (226), die so angeordnet ist, daß sie Luft aus der Nähe des ersten Achslagers an das zweite Achslager führt.

5. Maschine nach einem der Ansprüche 1-4, mit einem Gasfoliendrucklager (174), das eine axiale Lagerung für die Welle ergibt und das durch aus der Abgabevorrichtung stammende Luft geschmiert ist.

6. Maschine nach Anspruch 5, bei der die Welle eine Druckplatte (186) aufnimmt, die radial in einen Ringraum (190) führt, mit dem Luft aus dem Turbinengehäuse in Verbindung steht, wobei der Ringraum teilweise durch ein Paar stationärer radialer Wandungen (180, 186) festgelegt ist, die von der Druckplatte getrennt sind, um radiale Räume (196, 198) festzulegen, in denen die stationäre Folienvorrichtung (199) angeordnet ist.

7. Maschine nach Anspruch 6, bei der der Ringraum (190) direkt mit einem der Achslager (176) verbunden ist, wobei Luft nacheinander durch das Drucklager und das eine Axiallager (176) strömt.

8. Maschine nach einem der vorausgehenden Ansprüche zur Lieferung von Kühlluft (88) an einen konditionierten Raum, z.B. eine Flugzeugkabine, bei der die Welle einen ersten, äußeren, sich zwischen dem Lüfter und dem Turbinenrad erstreckenden Wellenabschnitt (118) und einem zweiten, äußeren, sich zwischen dem Lüfter und dem Laufrad erstrekenden Wellenabschnitt (120) erstreckt, wobei Endteile der äußeren Wellenabschnitte in jedem Fall durch einen Ringraum (206, 212) von einem umgebenden, stationären Bauteil getrennt sind, derart, daß zusammen mit den in den Ringräumen angeordneten Folien die Gasfolien-Achslager (176, 178) ausgebildet werden.

## Revendications

1. Machine frigorifique à cycle d'air comprenant un arbre (60), auquel sont fixés une roue (102) d'une turbine (54), un ventilateur (56) et une roue (114) d'un compresseur (58), le ventilateur étant placé sur l'arbre entre la roue de turbine et la roue de compresseur, et des moyens de distribution (82, 84, 86) pour amener à la roue de turbine l'air mis sous pression par le compresseur de sorte que la turbine est entraînée par l'air sous pression, ce qui fait tourner l'arbre et avec lui le compresseur et le ventilateur, caractérisée en ce que l'arbre est supporté par un ou plusieurs paliers à lames et à gaz (174, 176, 178) qui sont continuellement lubrifiés par de l'air sous pression qui est extrait du carter (98) de la roue de turbine, traverse le ou chaque palier à lames et à gaz, et aboutit dans le carter de ventilateur (104).

2. Machine suivant la revendication 1, comportant deux chemins parallèles d'écoulement d'air à partir du carter de la roue de turbine, à travers les paliers à lames et à gaz respectifs, et ensuite vers le carter de ventilateur.

3. Machine suivant la revendication 1 ou la revendication 2, dans laquelle les paliers comprennent deux paliers de tourillon (176, 178), un de chaque côté du ventilateur et comportant chacun une ou des parties fixes (200 208) supportées par le carter de ventilateur.

4. Machine suivant la revendication 3, comportant un passage de soutirage (218), pour transférer de l'air du carter de turbine à un premier des paliers de tourillon (176), et un autre passage (226) agencé pour envoyer l'air d'un endroit adjacent au premier palier de tourillon au deuxième palier de tourillon (178).

5. Machine suivant l'une quelconque des revendications précédentes, comprenant un palier de butée à lames et à gaz (174) fournissant un support axial pour l'arbre, le palier de butée à lames et à gaz étant lubrifié par de l'air dérivé à partir des moyens de distribution.

6. Machine suivant la revendication 5, dans laquelle l'arbre porte une plaque de butée (186) s'étendant radialement à partir de l'arbre et pénétrant dans un espace annulaire (190) auquel de l'air est amené à partir du carter de turbine, l'espace annulaire étant partiellement défini par deux parois radiales fixes (180, 186) séparées de la plaque de butée de manière à définir des espaces radiaux (196, 198) à l'intérieur desquels des moyens à lames fixes (199) sont disposés.

7. Machine suivant la revendication 6, dans laquelle l'espace annulaire (90) communique directement avec l'un des paliers de tourillon (176), de sorte que l'air traverse successivement le palier de butée et ledit palier de tourillon (176).

8. Machine suivant l'une quelconque des revendications précédentes pour fournir de l'air refroidi (88) à un espace climatisé, tel qu'une cabine d'avion, dans laquelle l'arbre comprend une première partie extérieure d'arbre (118) s'étendant entre le ventilateur et la roue de turbine et une deuxième partie extérieure d'arbre (120) s'étendant entre le ventilateur et le compresseur, les régions d'extrémité des parties extérieures d'arbre étant séparées dans chaque cas par un espace annulaire (206, 212) d'une région de structure fixe d'entourage de manière à, constituer, avec des lames placees dans les espaces annulaires, les paliers de tourillon à lame et à gaz (176, 178).

FIG. 1.
(PRIOR ART)

FIG. 2.

FIG. 3.

FIG.4.

FIG.5.

FIG. 6.

FIG. 7.